(19) Europäisches Patentamt
European Patent Office
Office européen des brevets

(11) EP 4 776 034 A1

(12) EUROPEAN PATENT APPLICATION

(43) Date of publication:
15.07.2026 Bulletin 2026/29

(51) International Patent Classification (IPC):
G02B 5/124 (2006.01)    G02B 30/56 (2020.01)
G02B 27/28 (2006.01)

(21) Application number: 25226193.8

(22) Date of filing: 22.12.2025

(52) Cooperative Patent Classification (CPC):
G02B 30/56; G02B 5/124; G02B 27/286

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 09.01.2025 JP 2025003257

(71) Applicant: Alps Alpine Co., Ltd.
Ota-ku,
Tokyo 145-8501 (JP)

(72) Inventors:
• Yuza, Shingo
Iwaki-city Fukushima (JP)
• Ashimine, Katsunari
Iwaki-city Fukushima (JP)

(74) Representative: Schmitt-Nilson Schraud Waibel
Wohlfrom
Patentanwälte Partnerschaft mbB
Pelkovenstraße 143
80992 München (DE)

(54) DISPLAY DEVICE

(57) A display device for displaying a floating aerial image using retroreflection includes a light source, a beam splitter, at least first and second retroreflection members disposed along different planes, and at least first and second phase plates disposed on respective surfaces of the first retroreflection member and the second retroreflection member, wherein the beam splitter is configured to reflect light from the light source to the first and second retroreflection members, and to transmit light reflected by the first and second retroreflection members so as to form the floating aerial image, and a slow axis of the first phase plate has an angle difference with respect to a slow axis of the second phase plate such that a difference between a phase difference of the light transmitted through the first phase plate and a phase difference of the light transmitted through the second phase plate becomes small.

FIG.3A

FIG.3B

**Description**

The present application is based on and claims priority to Japanese patent application no. 2025-003257 filed on January 9, 2025, with the Japan Patent Office, the entire contents of which are hereby incorporated by reference.

The disclosures herein relate to display devices for displaying floating aerial images using retroreflection, and more particularly, to reductions in luminance non-uniformity of the floating aerial image.

Aerial imaging by retroreflection (AIRR) is known. For example, Patent Literature (PTL) 1 discloses a display device in which an angle formed by a first plane and a second plane of a retroreflecting element is set to be greater than 0° and less than 180°, so that a floating aerial image is prevented from appearing deficient even when it is observed from two points.

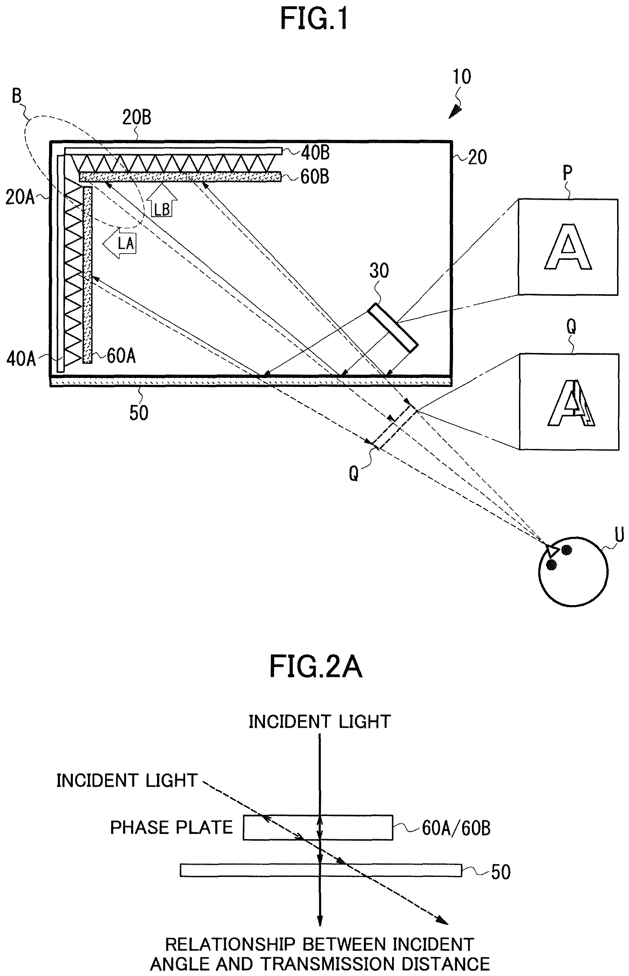

FIG. 1 is a top view schematically illustrating an internal configuration of a display device of an AIRR system in the related art. A display device 10 includes a rectangular housing 20, a light source 30 and retroreflection members 40A and 40B are arranged in the housing 20, and a beam splitter (or half mirror) 50 is attached to a lateral surface of the housing 20. The two retroreflection members 40A and 40B are disposed along different planes, and in proximity to inner surfaces 20A and 20B of the housing 20, which are orthogonal to each other, so that their reflecting surfaces are orthogonal to each other. An image P emitted from the light source 30 is reflected by the beam splitter 50 toward the retroreflection members 40A and 40B, and the light retro-reflected by the retroreflection members 40A and 40B is transmitted through the beam splitter 50, where a floating aerial image Q is formed at a side of the housing 20.

In order to efficiently form an image of the light of the image P emitted from the light source 30 on the floating aerial image Q, phase plates or phase films 60A and 60B for changing a polarization state of the light are adhered to the reflecting surfaces of the retroreflection members 40A and 40B. However, as shown in FIG. 1, when the retroreflection members 40A and 40B are arranged orthogonally, incident angles of incident light LA and LB are different at respective positions where the incident light is incident on the phase plates 60A and 60B. When the incident angles are different, distances through the phase plates 60A and 60B are different, and the phase differences of the light transmitted through the phase plates 60A and 60B are different, that is, the polarization states of the light transmitted through the phase plates 60A and 60B are different, and as a result, luminance non-uniformity occurs in the floating aerial image Q.

More specifically, (1) the light source 30 emits linearly polarized light, and the linearly polarized light is reflected by the beam splitter 50 having a transmission axis orthogonal to the polarization direction. As shown in FIG. 2A, light incident on the phase plates 60A and 60B from an oblique direction becomes elliptically polarized light when transmitted through the phase plates 60A and 60B because the distances through the phase plates are different, and the light transmitted through the phase plates 60A and 60B after being retroreflected by the retroreflection members 40A and 40B does not become linearly polarized light completely orthogonal to the polarization direction of the incident light on the phase plates 60A and 60B. Therefore, the light transmitted through the beam splitter 50 is reduced. Conversely, normally incident light on the phase plates 60A and 60B becomes circularly polarized light by the phase plates 60A and 60B, and the light transmitted through the phase plates 60A and 60B after being retroreflected by the retroreflection members 40A and 40B becomes linearly polarized light orthogonal to the polarization direction of the incident light on the phase plates 60A and 60B. Therefore, the light transmitted through the beam splitter 50 is not reduced. Therefore, when the incident angle of the light incident on the phase plate 60A is different from the incident angle of the light incident on the phase plate 60B, a shift occurs between the phase difference (polarization state) of the light transmitted through the phase plate 60A and the phase difference (polarization state) of the light transmitted through the phase plate 60B, and luminance non-uniformity occurs in the floating aerial image Q.

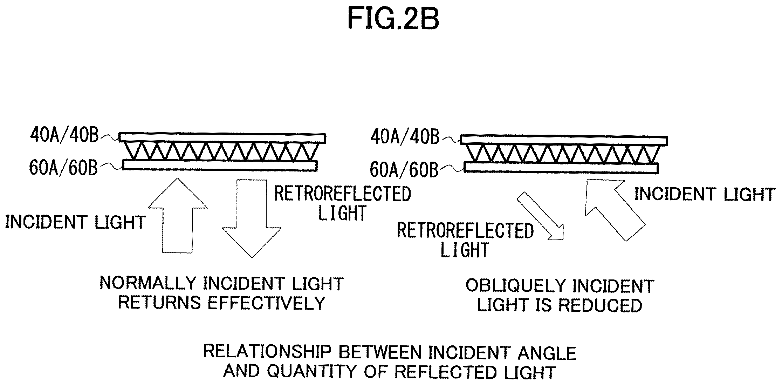

(2) As shown in FIG. 2B, for light incident obliquely on the phase plates 60A and 60B, the light returned from the retroreflection members 40A and 40B (retroreflectivity) is reduced due to the effect of an aperture of an optical element. However, normally incident light on the phase plates 60A and 60B is mostly reflected by the retroreflection members 40A and 40B. Therefore, when an incident angle of the light incident on the phase plate 60A and an incident angle of the light incident on the phase plate 60B are different, a quantity of retroreflected light is different, and luminance non-uniformity occurs in the floating aerial image Q.

When the retroreflection members 40A and 40B are orthogonally disposed, the luminance non-uniformity of the floating aerial image Q is not so significant when an observer U observes the floating aerial image Q formed by the retroreflected light from the retroreflection member 40A or the floating aerial image Q formed by the retroreflected light from the retroreflection member 40B. However, when the observer U observes the floating aerial image Q formed by the retroreflected light from the retroreflection member 40A and the retroreflected light from the retroreflection member 40B, the luminance non-uniformity of the floating aerial image Q becomes significant due to the shift in the phase difference near a boundary B where the retroreflection member 40A and the retroreflection member 40B are orthogonal.

The present disclosure aims to provide a display device to solve such problems of the related art and reduce the luminance non-uniformity of the floating aerial image when a plurality of retroreflection members are disposed along different planes.

[PTL 1] Japanese Laid-Open Patent Publication no. 2018-132712

The present disclosure relates to a touch detection system according to the appended claims. Embodiments are disclosed in the dependent claims.

According to an aspect, a display device for displaying a floating aerial image using retroreflection includes a light source, a beam splitter, at least a first retroreflection member and a second retroreflection member disposed along different planes, and at least a first phase plate and a second phase plate disposed on respective surfaces of the first retroreflection member and the second retroreflection member, wherein the beam splitter is configured to reflect light from the light source to the first retroreflection member and the second retroreflection member, and to transmit light reflected by the first retroreflection member and the second retroreflection member so as to form the floating aerial image, and a slow axis of the first phase plate has an angle difference with respect to a slow axis of the second phase plate. Accordingly, a difference between a phase difference of the light transmitted through the first phase plate and a phase difference of the light transmitted through the second phase plate is reduced, particularly becomes small.

According to aspects of the present disclosure, since the slow axes of the first and second phase plates disposed on surfaces of the first and second retroreflection members have an angle difference so that the difference between the phase difference of the light transmitted through the first phase plate and the phase difference of the light transmitted through the second phase plate is reduced, particularly becomes small, a shift between the polarization state of the light transmitted through the first phase plate and the polarization state of the light transmitted through the second phase plate is reduced, and luminance non-uniformity of a floating aerial image can be reduced. According to an embodiment, a slow axis of the first phase plate has an angle difference with respect to a slow axis of the second phase plate such that a difference between a phase difference of the light transmitted through the first phase plate and a phase difference of the light transmitted through the second phase plate becomes between $\pm50°$ (particularly corresponding to a rotation angle of $\pm25°$ for the slow axis). Particularly, a phase difference of up to $\pm50°$ may be allowed (corresponding to a rotation angle of $\pm25°$ for the slow axis).

FIG. 1 is a top view schematically illustrating an internal configuration of a display device of an AIRR system in the related art;

FIG. 2A is a drawing illustrating a relationship between an incident angle and a transmission distance to describe luminance non-uniformity of a floating aerial image;

FIG. 2B is a drawing illustrating a relationship between the incident angle and a quantity of retroreflected light to describe the luminance non-uniformity of the floating aerial image;

FIG. 3A is a top view schematically illustrating an internal configuration of a display device according to an example of the present disclosure;

FIG. 3B is a perspective view schematically illustrating the internal configuration of the display device according to the present example;

FIG. 4A is a drawing illustrating polarization when a $\lambda/2$ wave plate is used as a phase plate;

FIG. 4B is a drawing illustrating polarization when a $\lambda/4$ wave plate is used as a phase plate;

FIG. 5 is a drawing illustrating a relationship between the phase plate and the polarization of the display device according to the present example;

FIG. 6A is a drawing illustrating a relationship between slow axes of two phase plates in the related display device;

FIG. 6B is a drawing illustrating the relationship between the two phase plates in the display device of the present example;

FIG. 6C is a drawing illustrating an example of actual use of the phase plates in the display device of the present example;

FIG. 7 is a drawing illustrating a reference light for calculating the angle difference of the slow axes in the display device of the present example;

FIG. 8 is a drawing illustrating an example in which normally incident linearly polarized light and obliquely incident linearly polarized light are converted into circularly polarized light and elliptically polarized light, respectively;

FIG. 9A is a drawing illustrating a polarization state before a rotation of the phase plates;

FIG. 9B is a drawing illustrating a polarization state after the rotation of the phase plates;

FIG. 10 is a drawing illustrating a rotated retroreflection member of the display device of the present example; and

FIG. 11 is a drawing illustrating another example in which the retroreflection members of the present example are disposed along different planes.

In the following, embodiments of the present disclosure will be described. The present disclosure relates to a display device for displaying a floating aerial image using a retroreflection member. In one embodiment of the present disclosure, a phase plate or a phase difference film is attached to respective surfaces of a plurality of retroreflection members disposed along different planes, and angles of the slow axes of the phase plates are adjusted so as to reduce luminance non-uniformity of the floating aerial image. Note that the drawings referred to in the following description of the examples include exaggerated representations to facilitate understanding of the invention and do not represent the shape or scale of an actual product.

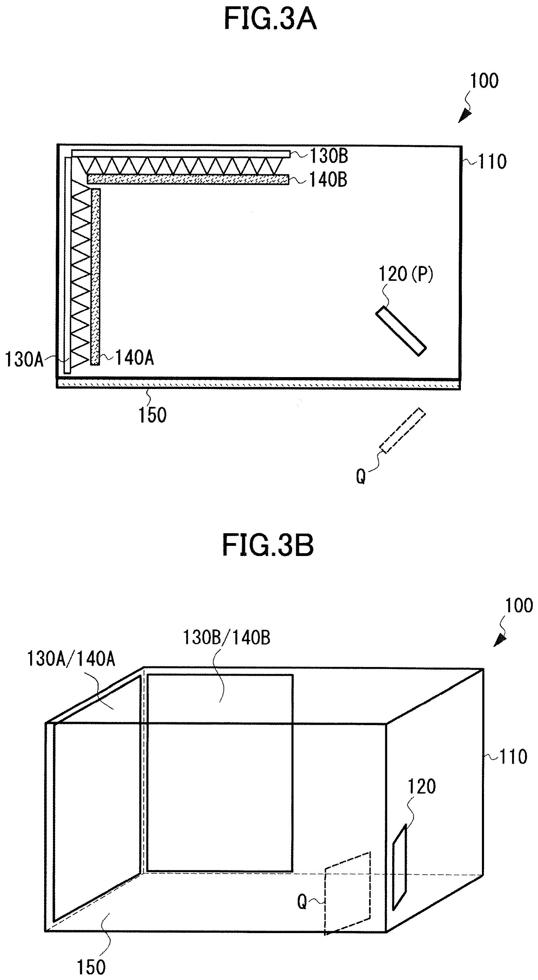

Next, examples of the present disclosure will be described in detail. FIG. 3A is a top view schematically illustrating an internal configuration of a display device according to an embodiment of the present disclosure, and FIG. 3B is a drawing illustrating a relationship between phase axes of the phase plates adhered to two retroreflection members.

A display device 100 of the present example includes a housing 110, a light source 120 arranged in the housing 110, two retroreflection members 130A and 130B arranged so that their reflecting surfaces are orthogonal to each other, phase plates or phase difference films 140A and 140B adhered to surfaces of the retroreflection members 130A and 130B, and a beam splitter 150. Although the shape and size of the housing 110 are not limited, the housing 110 has a substantially rectangular shape and accommodates the light source 120 and the retroreflection members 130A and 130B in its internal space. The beam splitter 150 is disposed on one lateral surface of the housing 110, and a floating aerial image Q is displayed at a position symmetrical to the light source 120 with respect to the surface of the beam splitter 150.

The light source 120 generates an original image P of the floating aerial image Q, and its configuration is not particularly limited, but may be, for example, an LED or an organic EL display, a projector, or an LED unit in which a plurality of LEDs are two-dimensionally arranged. In the example shown in the figure, the light source 120 is a display disposed inside the beam splitter 150, and the display emits light of the image P toward the beam splitter 150. The light emitted from such a display is generally linearly polarized light.

The beam splitter 150 is attached to the lateral surface of the housing 110 so that light from the light source 120 is incident on the beam splitter 150. The beam splitter 150 is formed, for example, by forming a dielectric multilayer film or an antireflection film on the front or rear surface of a substrate made of a flat plate of glass or plastic. The beam splitter 150 may be a half mirror, in which a quantity of reflected light is substantially equal to a quantity of transmitted light, a beam splitter, in which a ratio of a quantity of reflected light to a quantity of transmitted light is different, or a polarization beam splitter. In the present embodiment, the transmission axis of the beam splitter 150 is orthogonal to the polarization direction of the linearly polarized light of the light source 120, and the beam splitter 150 reflects most of the incident light from the light source 120 toward the retroreflection members 130A and 130B.

The retroreflection members 130A and 130B are optical members that reflect light in the same direction as the incident light, and the configuration is not particularly limited, and may include, for example, a triangular pyramid retroreflecting element, a full-cube corner retroreflecting element, or the like.

The retroreflection members 130A and 130B have a substantially rectangular shape, and are not disposed along the same plane, and are disposed so that their reflecting surfaces are orthogonal to each other along the left and right inner walls centering on the corners of the housing 110. Such an arrangement is just an example, and the retroreflection members 130A and 130B may be disposed along different planes according to design constraints such as the housing size, countermeasures against stray light, and viewing angles.

Phase plates 140A and 140B or phase difference films for generating a phase difference between incident light and transmitted light are adhered to surfaces of the retroreflection members 130A and 130B. Here, the phase plates 140A and 140B are $\lambda/4$ phase plates for generating a phase difference of $\lambda/4$. The phase plates 140A and 140B are adhered to the reflecting surfaces of the retroreflection members 130A and 130B, for example, and therefore, the phase plates 140A and 140B and the retroreflection members 130A and 130B are substantially integrally formed. However, the phase plates 140A and 140B need not necessarily be adhered to the retroreflection members 130A and 130B, and may be arranged separately from the retroreflection members 130A and 130B.

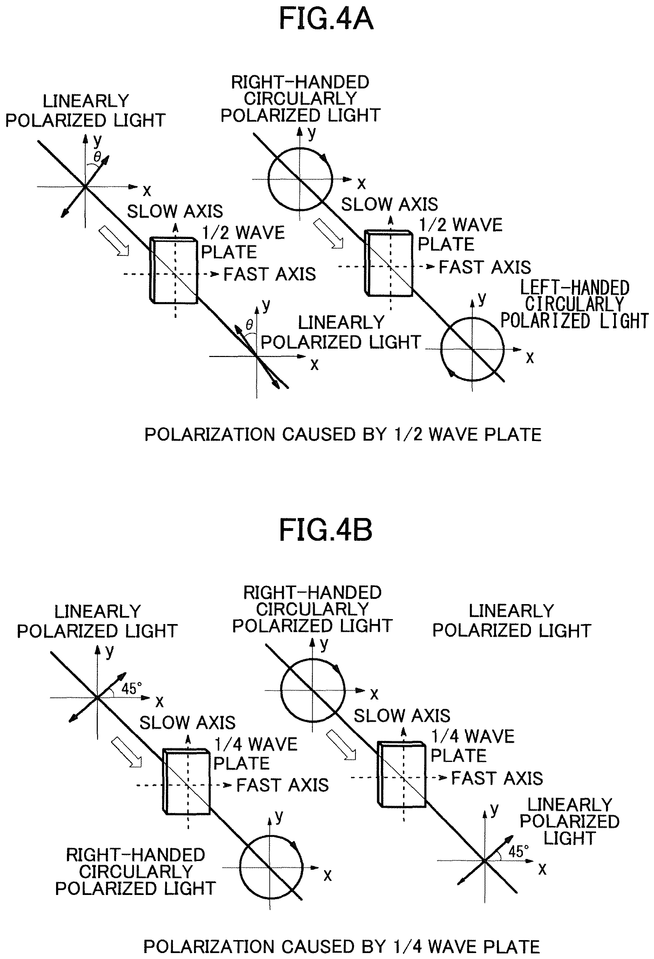

FIGS. 4A and 4B are drawings illustrating a relationship between a phase plate and polarization. FIG. 4A is a drawing illustrating a relationship between a phase plate and polarization when a $\lambda/2$ wave plate is used as a phase plate. A $\lambda/2$ wave plate imparts a phase difference of $\pi$ (180 degrees) between polarization components of light (components parallel and perpendicular to the optical axis), and this phase difference causes rotation of the polarization direction. In the $\lambda/2$ wave plate, an axis along which phase is relatively advanced is referred to as a fast axis (fast phase axis), and an axis along which phase is delayed is referred to as a slow axis (slow phase axis), and the slow axis is parallel to the optical axis. For example, when linearly polarized light having a polarization direction at an angle $\theta$ with respect to the y-axis (optical axis) passes through the $\lambda/2$ wave plate, the polarization direction is rotated. A rotation angle depends on the angle $\theta$ formed by the polarization direction of incident light and the optical axis, and concretely, the polarization direction is rotated by $2\theta$ with respect to the optical axis. When the polarization direction is 45 degrees with respect to the optical axis, the polarization direction of the transmitted light is rotated by 90 degrees. If the polarization direction is parallel or perpendicular to the optical axis, the polarization direction does not change. In addition, when right-handed circularly polarized light is transmitted through the $\lambda/2$ wave plate, a direction of the circularly polarized light is reversed.

FIG. 4B is a drawing illustrating a relationship between a phase plate and polarization when a $\lambda/4$ phase plate is used as a phase plate. The $\lambda/4$ wave plate imparts a phase difference of $\pi/2$ (90°) between polarization components of light (components parallel and perpendicular to the optical axis). When the polarization direction of the incident linearly polarized light forms an angle of 45° with the optical axis of the $\lambda/4$ wave plate, emitted light becomes right-handed circularly polarized light. When the polarization direction forms an angle of 135°, emitted light becomes left-handed circularly polarized light. When the polarization direction forms an angle other than 45° with the optical axis, the output light becomes elliptically polarized light. When the right-handed circularly polarized light transmits the λ/4 wave plate, emitted light is linearly polarized with a polarization direction of 45° with respect to the optical axis.

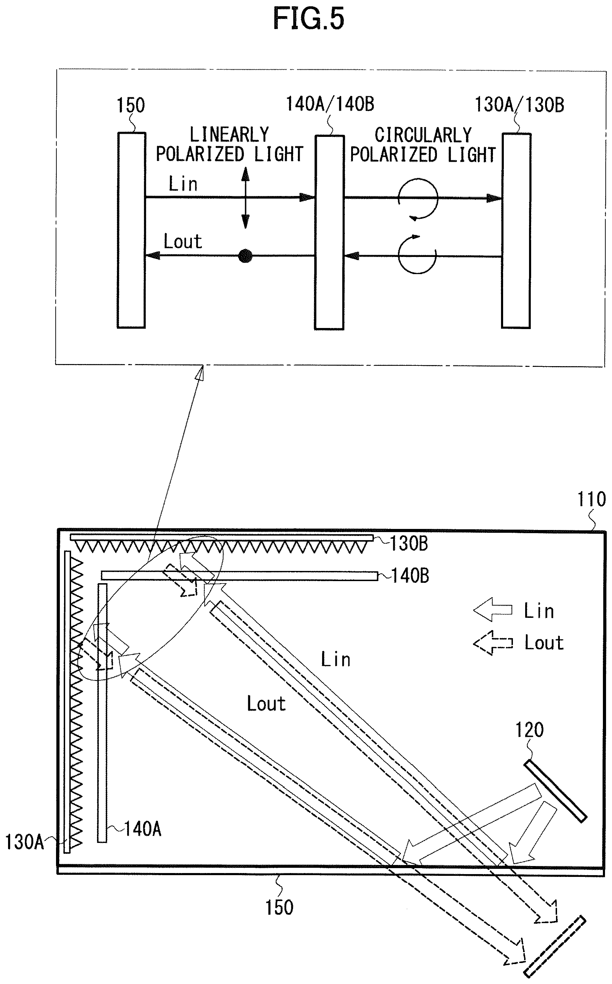

FIG. 5 is a drawing illustrating a polarization state of the phase plates 140A and 140B and the retroreflection members 130A and 130B in the display device of the present example. Here, in the bottom of FIG. 5, the light Lin reflected by the beam splitter 150 and directed to the phase plates 140A and 140B is shown with a solid line, and the light Lout directed from the phase plates 140A and 140B to the beam splitter 150 is shown with a broken line. The phase plates 140A and 140B are λ/4 wave plates, and an example is shown in which the light Lin is normally incident on the phase plates 140A and 140B.

The linearly polarized light emitted from the light source 120 is reflected by the beam splitter 150, and the light Lin is incident on the phase plates 140A and 140B. When the polarization direction of the light Lin is 45 degrees with respect to the slow axis (optical axis) of the phase plates 140A and 140B, the light transmitted through the phase plates 140A and 140B becomes right-handed circularly polarized light. Since the circularly polarized light is reflected by the retroreflection members 130A and 130B in the same direction as the incident light, the light incident on the phase plates 140A and 140B from the retroreflection members 130A and 130B becomes left-handed circularly polarized light, and the light transmitted through the phase plates 140A and 140B becomes linearly polarized light Lout whose polarization direction is 135 degrees with respect to the slow axis (optical axis). The transmission axis of the beam splitter 150 coincides with the polarization direction of the linearly polarized light, and the light Lout transmits the beam splitter 150 to form a floating aerial image Q.

As described in the description of the related art, when the incident angle of the light on the phase plate 140A differs from that on the phase plate 140B, a shift occurs between the phase difference of the light transmitted through the phase plate 140A and the phase difference of the light transmitted through the phase plate 140B. As a result, the light forming the floating aerial image Q becomes linearly polarized light with different phase shifts, causing luminance non-uniformity.

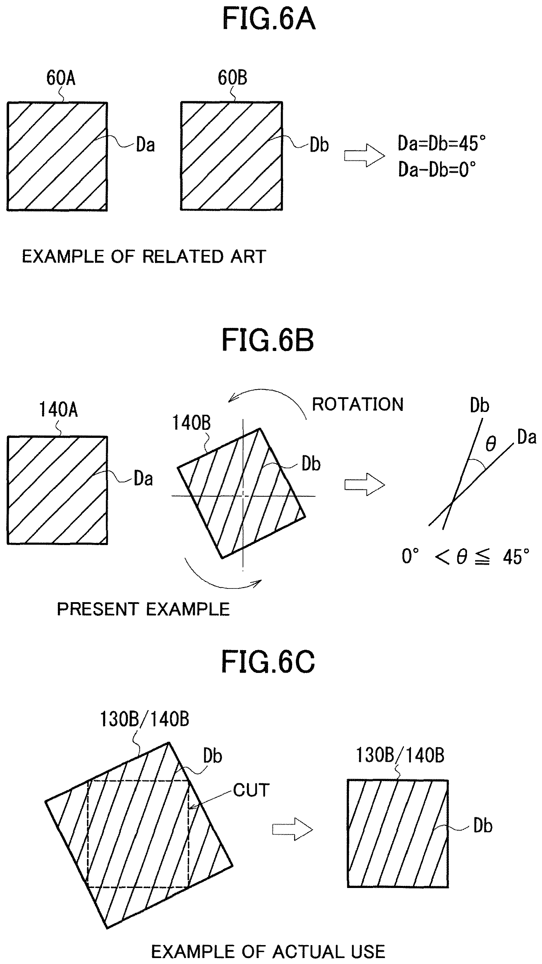

FIG. 6A is a drawing illustrating a relationship between slow axes (light axes) Da and Db of two phase plates 60A and 60B in the related display device. The slow axis Da of the phase plate 60A is 45 degrees with respect to the longitudinal axis when viewed from the front, and the slow axis Db of the phase plate 60B is also 45 degrees with respect to the longitudinal axis, and both slow axes have a relationship of Da = Db.

In the present example, an angle difference is provided between the slow axis Da and the slow axis Db of the phase plates 140A and 140B so that the difference between the phase differences of the light transmitted through the phase plates 140A and 140B becomes small. That is, one or both of the phase plates 140A and 140B are rotated so that linearly polarized light with different phase shifts from the phase plate 140A and the phase plate 140B approaches linearly polarized light with the same phase shift, which reduces luminance non-uniformity of the floating aerial image and thereby optimizes the state of the floating aerial image. Preferably, at least one of the phase plates 140A and 140B is rotated so that the angle difference θ between the slow axis Da of the phase plate 140A and the slow axis Db of the phase plate 140B becomes more than 0 degrees and less than 45 degrees (0 < angle difference θ < 45). FIG. 6B shows an example in which the phase plate 140B is rotated by an angle θ around the normal line to the principal plane of the phase plate 140B at the center.

For example, when rotating phase plate 140B, a phase difference of up to ±50° may be achieved (corresponding to a rotation angle of ±25° for the slow axis). Particularly, based on an ideal condition, a phase difference of between ±50° may be allowed. Within this range, the brightness difference between aerial images with light reflected from retroreflection member 130A and light reflected from retroreflection member 130B can be kept within 30%.

When the phase plates 140A and 140B are separated from the retroreflection members 130A and 130B, at least one of the phase plates 140A and 140B is rotated so that an angle difference is made between the slow axis Da and the slow axis Db. Conversely, when the phase plates 140A and 140B have an integral structure attached to the surface of the retroreflection members 130A and 130B, at least one of the retroreflection members 130A and 130B is rotated so that an angle difference is made between the slow axis Da and the slow axis Db. FIG. 6C is a drawing illustrating an example of actual use of the retroreflection member 130B having an integral structure in which the retroreflection member 130B to which the phase plate 140B is attached is rotated by an angle θ and cut into a rectangular shape so that the slow axis Db is rotated.

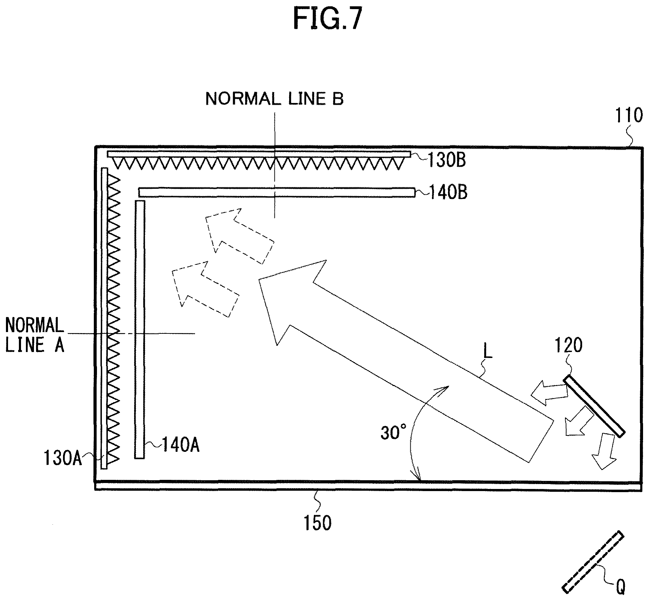

Next, a method of calculating the rotation angles of the slow axes Da and Db of the phase plates 140A and 140B will be described with reference to FIG. 7. Although the light source 120 emits light at a fixed viewing angle, here, for the sake of clarity, it is assumed that the light L emitted from the center of the light source 120 is a reference light, and that the reference light has an angle of 30 degrees with respect to the principal plane of the beam splitter 150 and is reflected toward the phase plates 140A and 140B. That is, the reference light is incident at an angle of 30 degrees with respect to the normal line A to the phase plate 140A and at an angle of 60 degrees with respect to the normal line B to the phase plate 140B.

CALCULATION OF PHASE DIFFERENCE WITH RESPECT TO ANGLE OF LIGHT INCIDENT ON PHASE PLATE

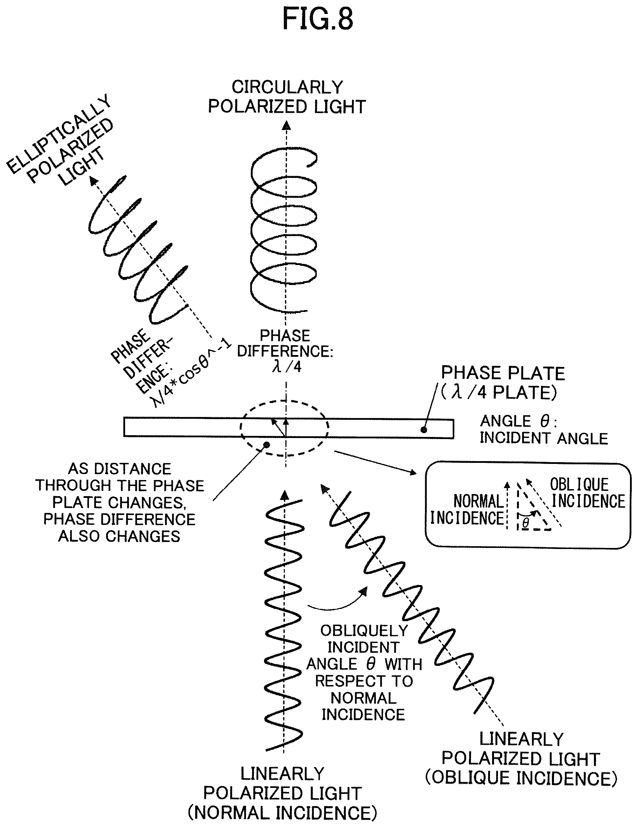

The phase plate (λ/4 wave plate) is a film that converts linearly polarized light incident normally into circularly polarized light by shifting the phase by A/4. As shown in FIG. 8, obliquely incident linearly polarized light becomes elliptically polarized because an optical path length through the phase plate differs from that for normal incidence. Consider the phase difference when linearly polarized light incident on the retroreflection members 130A and 130B (phase plates 140A and 140B) disposed in an L-shape shown in FIG. 7 passes through the phase plates 140A and 140B, respectively. Here, the wavelength of the reference light is 650 nm, and the phase difference of light incident on the retroreflection members 130A and 130B is obtained by the following equation.

[Math 1]

$$\lambda = 650 \ [\text{nm}]$$

: Wavelength of light incident on the phase plate

$$\varphi = \lambda \div 4 \ [\text{nm}]$$

: Phase difference when incident directly on the phase plate

$$\varphi' = \lambda \div 4 \times \frac{1}{cos\theta} \ [nm]$$

: Phase difference when incident obliquely (angle: θ) on the phase plate

The phase difference of the light incident on the retroreflection member 130A is as follows.

[Math 2]

$$\varphi' = \lambda \div 4 \times \frac{1}{cos\theta}$$

$$= 650 \div 4 \times \frac{1}{\cos(30)}$$

$$= 187.6 \ [\text{nm}] \ \blacktriangleright \ \text{When the unit is converted into an angle: 103.9 [deg.]}$$

The phase difference of the light incident on the retroreflection member 130B is as follows.

[Math 3]

$$\varphi' = \lambda \div 4 \times \frac{1}{cos\theta}$$

$$= 650 \div 4 \times \frac{1}{\cos(60)}$$

$$= 325 \ [\text{nm}] \ \blacktriangleright \ \text{When the unit is converted into an angle: 180 [deg.]}$$

CALCULATION OF PHASE DIFFERENCE BY ROTATING PHASE PLATE

Either of the retroreflection members (slow axis) is rotated so that the phase difference of the retroreflection member 130A and the phase difference of the retroreflection member 130B approach each other.

The phase difference of the retroreflection member 130A is 187.6 nm and the phase difference of the retroreflection member 130B is 325 nm. Here, as an example, the slow axis of the retroreflection member 130B is rotated so that the phase difference of the retroreflection member 130B is 187.6 nm. That is, the rotation angle of the slow axis may be determined such that the phase difference of the retroreflection member 130B can be reduced by 137.4 [nm] (325 - 187.6 = 137.4).

When the phase difference after rotating the phase plate is referred to as $\varphi$ and the rotation angle is referred to as $\theta$, the relationship between them is expressed by the following equation. When the rotation angle is 0 [deg.], the phase difference is 162.5 nm. Therefore, in this case, $\theta$ is 25.1 nm (162.5 - 137.4 = 25.1). The rotation angle is calculated by substituting this into the following equation.

[Math 4]

$$\varphi = \lambda \div 4 \times (\cos\theta + \sin\theta)[nm]$$
$$25.1 = 650 \div 4 \times (\cos\theta + \sin\theta)$$
$$(\cos\theta + \sin\theta) = 25.1 \div 162.5$$
$$(\cos\theta + \sin\theta) = 0.1544615385$$
$$\theta = \pm 42.44589 \cdots$$

Therefore, it is sufficient to rotate the retroreflection member 130B (slow axis) by approximately 42 degrees.

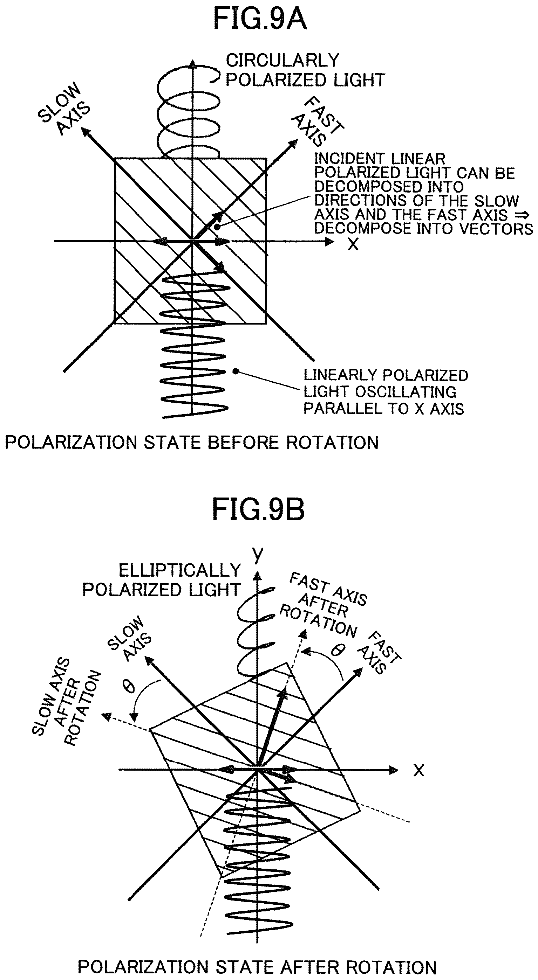

FIG. 9A is a drawing illustrating a polarization state before rotation of the phase plates. As shown in the figure, the slow axis (parallel to the optical axis) and the fast axis of the phase plate ($\lambda$/4 wave plate) are orthogonal, the slow axis is 45 degrees to the x-axis, and the polarization direction of linearly polarized light is parallel to the x-axis. The linearly polarized light incident on the phase plate is decomposed into two polarization components of the slow axis and the fast axis, and a phase difference of $\lambda$/4 occurs in the light along the slow axis and the fast axis. When the polarization direction of linearly polarized light is at an angle of 45 degrees to the optical axis, the components of the slow axis and the components of the fast axis are equal, and when the two polarization components are combined after passing through the phase plate, the light becomes circularly polarized.

FIG. 9B is a drawing illustrating a polarization state after rotation of the phase plates. When the phase plate is rotated by an angle $\theta$, the polarization direction of linearly polarized light becomes an angle of (45 - $\theta$) to the slow axis (optical axis), and the polarization component of the slow axis becomes relatively smaller than that of the fast axis, and when the two polarization components are combined after passing through the phase plate, the light becomes elliptically polarized.

Thus, since the polarization state of the light transmitted through the phase plate can be changed by the rotation of the phase plate, the difference between the phase difference (polarization state) of the light transmitted through the phase plate 140A incident from the oblique direction and the phase difference (polarization state) of the light transmitted through the phase plate 140B incident from the oblique direction can be approximated by appropriately selecting the rotation angle of the phase plate.

Conversely, when the slow phase axis (optical axis) of the phase plate is parallel to the x-axis, the polarization component of the linearly polarized light is only the component of the slow phase axis and the component of the fast phase axis is zero, so that no phase difference occurs between the light along the slow phase axis and the light along the fast phase axis, and the light transmitted through the phase plate remains linearly polarized without becoming circularly polarized. Additionally, when the slow phase axis (optical axis) of the phase plate is parallel to the y-axis, the polarization component of the linearly polarized light is only the component of the fast phase axis and the component of the slow phase axis is zero, so that no phase difference occurs between the light along the slow phase axis and the light along the fast phase axis, and the light transmitted through the phase plate remains linearly polarized without becoming circularly polarized. In this way, the polarization state can be controlled by the rotation of the phase plate by a maximum of 45 degrees, and therefore, the upper limit of the rotation angle of the slow phase axis of the phase plate is defined to be less than 45 degrees.

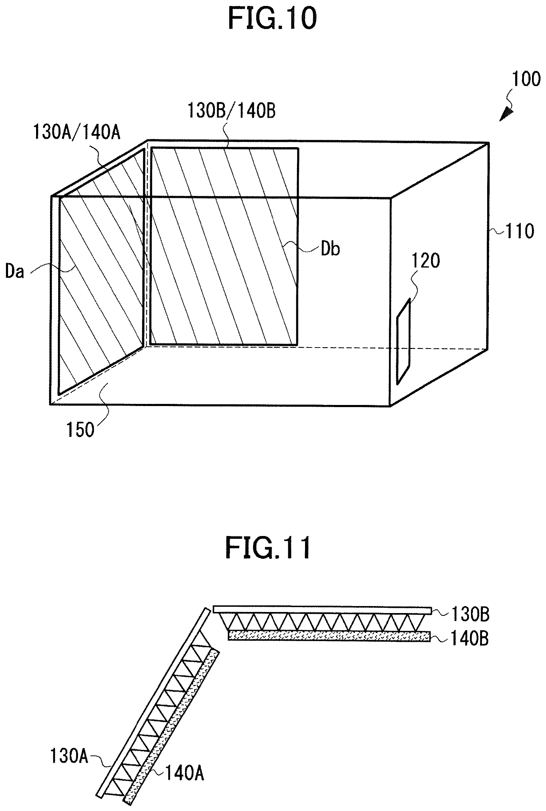

FIG. 10 is a top view schematically illustrating the internal configuration of the display device of the present example, and shows an example in which the slow axis Db of the retroreflection member 130B (phase plate 140B) is rotated. The retroreflection member 130B (phase plate 140B) is rotated in the range of 0 < rotation angle $\theta$ < 45 degrees about the normal line of the center of its principal plane.

FIG. 11 is a drawing illustrating another example in which the retroreflection members of the present example are disposed along different planes. In the above-described example, the retroreflection member 130A and the retroreflection member 130B are disposed in an L-shape at right angles to each other, but this is only an example. For example, as shown in FIG. 11, the retroreflection member 130A and the retroreflection member 130B may be arranged at an obtuse angle where the angle of intersection of the reflecting surfaces is more than 90 degrees. In short, the angle formed by the principal planes (reflecting surfaces) of the retroreflection member 130A and the retroreflection member 130B may be 0 < the angle of intersection < 180. Furthermore, the retroreflection member 130A and the retroreflection member 130B need not necessarily have the same shape and size.

In the above-described example, the slow axis of the retroreflection member 130B is rotated so that the difference (deviation) between the phase difference of the light transmitted through the phase plate 140A and the phase difference of the light transmitted through the phase plate 140B is eliminated, but this is not limited to this example. The slow axes of the two retroreflection members 130A and 130B may be rotated, or the slow axis of the retroreflection member 130A may be rotated. Further, when the phase plate and the retroreflection member are separated, the slow axis of at least one of the phase plates 140A and 140B may be rotated.

Further, the present disclosure is not limited to these embodiments, and various modifications may be made without departing from the scope of the claims.

**Claims**

1.  A display device for displaying a floating aerial image using retroreflection, comprising:

    a light source;
    a beam splitter;
    at least a first retroreflection member and a second retroreflection member disposed along different planes; and
    at least a first phase plate and a second phase plate disposed on respective surfaces of the first retroreflection member and the second retroreflection member, wherein:

    the beam splitter is configured to reflect light from the light source to the first retroreflection member and the second retroreflection member, and to transmit light reflected by the first retroreflection member and the second retroreflection member so as to form the floating aerial image; and
    a slow axis of the first phase plate has an angle difference with respect to a slow axis of the second phase plate.

2.  The display device according to claim 1, wherein the angle difference is more than 0 degrees and less than 45 degrees.

3.  The display device according to one of claims 1 or 2, wherein the slow axis of the first phase plate has an angle difference with respect to the slow axis of the second phase plate such that a shift between a polarization state of the light transmitted through the first phase plate and a polarization state of the light transmitted through the second phase plate is reduced.

4.  The display device according to one of claims 1 to 3, wherein the slow axis of the first phase plate has an angle difference with respect to the slow axis of the second phase plate such that a difference between a phase difference of the light transmitted through the first phase plate and a phase difference of the light transmitted through the second phase plate becomes between $\pm 50°$.

5.  The display device according to one of claims 1 to 4, wherein the first phase plate and the second phase plate are $\lambda/4$ wave plates.

6.  The display device according to one of claims 1 to 5, wherein the angle difference is generated by rotating at least one phase plate, among the first phase plate and the second phase plate, about a normal line to a principal plane of the at least one phase plate at a center of the principal surface.

7.  The display device according to one of claims 1 to 6, wherein an angle between a reflecting surface of the first retroreflection member and a reflecting surface of the second retroreflection member is more than 0 degrees and less than 180 degrees.

8.  The display device according to one of claims 1 to 7, wherein:

    the first retroreflection member and the second retroreflection member are disposed in an L-shape;
    the first phase plate and the second phase plate are adhered to the respective surfaces of the first retroreflection member and the second retroreflection member; and

the angle difference is generated by rotating at least one of the first retroreflection member or the second retroreflection member.

# FIG.1

# FIG.2A

INCIDENT LIGHT

INCIDENT LIGHT

PHASE PLATE — 60A/60B

— 50

RELATIONSHIP BETWEEN INCIDENT
ANGLE AND TRANSMISSION DISTANCE

# FIG.2B

40A/40B

60A/60B

INCIDENT LIGHT

RETROREFLECTED
LIGHT

NORMALLY INCIDENT LIGHT
RETURNS EFFECTIVELY

40A/40B

60A/60B

INCIDENT LIGHT

RETROREFLECTED
LIGHT

OBLIQUELY INCIDENT
LIGHT IS REDUCED

RELATIONSHIP BETWEEN INCIDENT ANGLE
AND QUANTITY OF REFLECTED LIGHT

EP 4 776 034 A1

# FIG.3A

# FIG.3B

# FIG.4A

LINEARLY
POLARIZED LIGHT

RIGHT-HANDED
CIRCULARLY
POLARIZED LIGHT

SLOW AXIS

1/2 WAVE
PLATE

FAST AXIS

SLOW AXIS

1/2 WAVE
PLATE

FAST AXIS

LEFT-HANDED
CIRCULARLY
POLARIZED LIGHT

LINEARLY
POLARIZED LIGHT

POLARIZATION CAUSED BY 1/2 WAVE PLATE

# FIG.4B

LINEARLY
POLARIZED LIGHT

RIGHT-HANDED
CIRCULARLY
POLARIZED LIGHT

LINEARLY
POLARIZED LIGHT

45°

SLOW AXIS

1/4 WAVE
PLATE

FAST AXIS

SLOW AXIS

1/4 WAVE
PLATE

FAST AXIS

RIGHT-HANDED
CIRCULARLY
POLARIZED LIGHT

LINEARLY
POLARIZED
LIGHT

45°

POLARIZATION CAUSED BY 1/4 WAVE PLATE

# FIG.5

# FIG.6A

60A

60B

Da

Db

Da=Db=45°
Da−Db=0°

EXAMPLE OF RELATED ART

# FIG.6B

140A

140B

ROTATION

Db

Da

Db

Da

θ

0° < θ ≦ 45°

PRESENT EXAMPLE

# FIG.6C

130B/140B

Db

CUT

130B/140B

Db

EXAMPLE OF ACTUAL USE

# FIG.7

# FIG.8

ELLIPTICALLY POLARIZED LIGHT

CIRCULARLY POLARIZED LIGHT

PHASE DIFFERENCE: $\lambda/4*\cos\theta^{\wedge}-1$

PHASE DIFFERENCE: $\lambda/4$

PHASE PLATE ($\lambda/4$ PLATE)

ANGLE $\theta$: INCIDENT ANGLE

AS DISTANCE THROUGH THE PHASE PLATE CHANGES, PHASE DIFFERENCE ALSO CHANGES

NORMAL INCIDENCE   OBLIQUE INCIDENCE

$\theta$

OBLIQUELY INCIDENT ANGLE $\theta$ WITH RESPECT TO NORMAL INCIDENCE

LINEARLY POLARIZED LIGHT (OBLIQUE INCIDENCE)

LINEARLY POLARIZED LIGHT (NORMAL INCIDENCE)

# FIG.9A

SLOW AXIS

FAST AXIS

CIRCULARLY POLARIZED LIGHT

INCIDENT LINEAR POLARIZED LIGHT CAN BE DECOMPOSED INTO DIRECTIONS OF THE SLOW AXIS AND THE FAST AXIS ⇒ DECOMPOSE INTO VECTORS

X

LINEARLY POLARIZED LIGHT OSCILLATING PARALLEL TO X AXIS

POLARIZATION STATE BEFORE ROTATION

# FIG.9B

y

ELLIPTICALLY POLARIZED LIGHT

FAST AXIS AFTER ROTATION

FAST AXIS

SLOW AXIS

SLOW AXIS AFTER ROTATION

θ

θ

X

POLARIZATION STATE AFTER ROTATION

# FIG.10

# FIG.11

Europäisches
Patentamt

European
Patent Office

Office européen
des brevets

# EUROPEAN SEARCH REPORT

**Application Number**

EP 25 22 6193

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/369409 A1 (YAMADA NAOYOSHI [JP] ET AL) 5 December 2019 (2019-12-05) * abstract * * Paragraphs [0002], [0023], [0097], [0098], [0099], [0100], [0103], [0104], [0105], [0106], [0107], [0108], [0109], [0110], [0111] * * figures 1-25 * | 1-8 | INV. G02B5/124 G02B30/56 G02B27/28 |
| X | US 2018/024373 A1 (JOSEPH DANIEL M [US] ET AL) 25 January 2018 (2018-01-25) * abstract * * Paragraphs [0001], [0007], [0011], [0085], [0086], [0087], [0089], [0090] * * figures 1-19 * | 1 | |
| X | JP 2017 107165 A (UNIV UTSUNOMIYA) 15 June 2017 (2017-06-15) * abstract * * Paragraphs [0001], [0009], [0013], [0029], [0030], [0038], [0039], [0041], [0044], [0046]-[0049], [0051], [0053], [0064], [0067], [0068], [0071]-[0073] * * figures 1-51 * | 1 | |

**TECHNICAL FIELDS SEARCHED (IPC)**

G02B

The present search report has been drawn up for all claims

| Place of search | Date of completion of the search | Examiner |
|---|---|---|
| Munich | 26 May 2026 | Kienle, Philipp |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

    

& : member of the same patent family, corresponding
   document

EPO FORM 1503 03.82 (P04C01)

**EP 4 776 034 A1**

## ANNEX TO THE EUROPEAN SEARCH REPORT
## ON EUROPEAN PATENT APPLICATION NO.

EP 25 22 6193

This annex lists the patent family members relating to the patent documents cited in the above-mentioned European search report.
The members are as contained in the European Patent Office EDP file on
The European Patent Office is in no way liable for these particulars which are merely given for the purpose of information.

26-05-2026

| Patent document cited in search report | | | Publication date | Patent family member(s) | | | Publication date |
|---|---|---|---|---|---|---|---|
| US 2019369409 | A1 | | 05-12-2019 | JP | 6632747 | B2 | 22-01-2020 |
| | | | | JP | WO2018151220 | A1 | 08-08-2019 |
| | | | | US | 2019369409 | A1 | 05-12-2019 |
| | | | | WO | 2018151220 | A1 | 23-08-2018 |
| US 2018024373 | A1 | | 25-01-2018 | US | 2018024373 | A1 | 25-01-2018 |
| | | | | US | 2018259784 | A1 | 13-09-2018 |
| JP 2017107165 | A | | 15-06-2017 | JP | 6927554 | B2 | 01-09-2021 |
| | | | | JP | 7067809 | B2 | 16-05-2022 |
| | | | | JP | 7128541 | B2 | 31-08-2022 |
| | | | | JP | 7226824 | B2 | 21-02-2023 |
| | | | | JP | 2017107165 | A | 15-06-2017 |
| | | | | JP | 2021047438 | A | 25-03-2021 |
| | | | | JP | 2021047439 | A | 25-03-2021 |
| | | | | JP | 2021047440 | A | 25-03-2021 |
| | | | | TW | 201730629 | A | 01-09-2017 |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2025003257 A
- JP 2018132712 A